# EUROPÄISCHE PATENTANMELDUNG

(11) **EP 2 481 513 A1**
(43) Veröffentlichungstag der Anmeldung: **01.08.2012**
(21) Anmeldenummer: 11002929.5
(22) Anmeldetag: 07.04.2011
(51) Int. Cl.: B23K 9/16, B23K 9/32, B23K 35/38

(54) **Verfahren und Vorrichtung zum Lichtbogenfügen durch verwendung einer Schutzgasmischung ; entsprechende Schutzgasmischung**

(30) Priorität: 01.02.2011 DE 102011009963
(71) Anmelder: Linde AG, 80331 München (DE)
(72) Erfinder: Matz, Christoph, 85716 Unterschleißheim (DE); Bayerl, Wilhelm, 82041 Deisenhofen (DE)

(57) **Zusammenfassung**

Die Erfindung betrifft ein Verfahren zum Lichtbogenlöten, insbesondere zum Lichtbogenschweißen mit abschmelzender oder nicht abschmelzender Elektrode unter Schutzgas und eine Schutzgasmischung, wobei das Schutzgas beziehungsweise die Schutzgasmischung einen silanhaltigen Schutzgaszusatz enthält, welcher aus mindestens einem unter Normaldruck im Temperaturbereich von 1 bis 50 °C, bevorzugt von 5 bis 35 °C, besonders bevorzugt von 10 bis 30 °C flüssigen linearen, verzweigten oder zyklischen, mindestens drei Siliziumatome aufweisenden Silan, das gegebenenfalls mit einer oder mehreren (C₁-C₆)-Alkyl-, bevorzugt Methylgruppen substituiert sein kann, oder/und aus mindestens einem zumindest mit einer (C₁-C₆)-Alkylgruppe substituierten Mono- oder Disilan ausgewählt ist. Es entstehen im Lichtbogen aus dem silanhaltigen Schutzgaszusatz Siliziumverbindungen, welche beim Abkühlen der Fügenaht als Kondensationskeime dienen.

## Beschreibung

Die Erfindung betrifft ein Verfahren zum Lichtbogenfügen, insbesondere zum Lichtbogenschweißen mit abschmelzender oder nicht abschmelzender Elektrode unter Schutzgas.

Beim Lichtbogenschweißen wird mittels übertragenem oder nicht übertragenem Lichtbogen Energie in eine Bearbeitungsstelle eingebracht, so dass eine Schweißverbindung entsteht. Beim Lichtbogenschweißen mit abschmelzender Elektrode liefert die abschmelzende Elektrode Zusatzmaterial in die Verbindungsnaht. Neben dem Lichtbogenschweißen gibt es das Lichtbogenlöten, welches sich vom Lichtbogenschweißen durch einen im Vergleich zum Schweißen geringen Energieeintrag auszeichnet, so dass der Zusatzwerkstoff nicht aber das Bearbeitungsstück schmilzt. Diese beiden Prozesse werden unter dem Begriff des Lichtbogenfügens zusammengefasst.

Die EP 612 580 B1 ein Verfahren zum Herstellen von Rohren mittels Schweißen, bei welchem zur Erhöhung der Korrosionsbeständigkeit eine siliziumhaltige Schicht im Bereich der Schweißverbindung erzeugt wird, indem dem Formiergas und teilweise auch dem Schutzgas Siliziumhydrid (Monosilan) zugegeben wird.

Die US 2768278 offenbart eine Zugabe von Siliziumtetrachlorid in ein inertes Schutzgas, um eine Erhöhung der Schweißgeschwindigkeit zu erreichen. Das Inertgas durchströmt dabei das flüssige Siliziumtetrachlorid und reichert sich dabei zu der Schutzgasmischung an, welche dann über die Schweißdüse an die Bearbeitungsstelle geführt wird.

Die W02007/014648 wiederum beinhaltet ein Verfahren, bei welchem mit einem Gasstrom gasförmige Verbindungen zur Fügestelle gebracht werden, die bei erhöhter Temperatur zerfallen und Partikel abscheiden. Eingetragen werden dabei bevorzugt Metalle, Metallionen oder Elemente wie Silizium und Bor.

In der EP 0 020 174 A1 wird zur Ozonreduzierung eine Dotierung des Schutzgases mit einem Dotiergas offenbart. Als mögliche Dotiergase werden Wasserstoff, Stickstoffmonoxid, Kohlenmonoxid, halogenierte Kohlenwasserstoffe und auch Silan genannt. Über eine Einstellung der thermischen Leitfähigkeit des Schutzgases erfolgt die Schutzgasherstellung.

Der Erfindung liegt die Aufgabe zugrunde, qualitativ hochwertige Fügeverbindungen möglich zu machen. Auch ist es Aufgabe der Erfindung, das Schweißen und Löten mit Lichtbogen zu verbessern.

Überraschenderweise hat sich nun gezeigt, dass unter Verwendung eines Schutzgases mit einem silanhaltigen Schutzgaszusatz qualitativ hochwertige Schweißnähte und Lötnähte von feinkörniger Beschaffenheit erhalten werden.

Demgemäß betrifft die Erfindung ein Verfahren zum Lichtbogenfügen, insbesondere zum Lichtbogenschweißen unter Schutzgas mit abschmelzender oder nichtabschmelzender Elektrode, dadurch gekennzeichnet, dass das Schutzgas einen silanhaltigen Schutzgaszusatz enthält, welcher aus mindesten einem unter Normaldruck im Temperaturbereich von 1 bis 50 °C, bevorzugt von 5 bis 35 °C, besonders bevorzugt von 10 bis 30 °C flüssigen linearen, verzweigten oder zyklischen, mindestens drei Siliziumatome aufweisenden Silan, das gegebenenfalls mit einer oder mehreren (C₁-C₆)-Alkyl-, bevorzugt Methylgruppen substituiert sein kann, oder/und aus mindestens einem zumindest mit einer (C₁-C₆)-Alkylgruppe substituierten Mono- oder Disilan ausgewählt ist. Ferner betrifft die Erfindung eine Schutzgasmischung, welche aus einem silanhaltigen Schutzgaszusatz und ferner aus Argon, Helium, Kohlendioxid, Sauerstoff, Stickstoff und/oder Wasserstoff besteht, wobei der silanhaltige Schutzgaszusatz aus mindestens einem unter Normaldruck im Temperaturbereich von 1 bis 50 °C, bevorzugt von 5 bis 35 °C, besonders bevorzugt von 10 bis 30 °C flüssigen linearen, verzweigten oder zyklischen, mindestens drei Siliziumatome aufweisenden Silan, das gegebenenfalls mit einer oder mehreren (C₁-C₆)-Alkyl-, bevorzugt Methylgruppen substituiert sein kann, oder/und aus mindestens einem zumindest mit einer (C₁-C₆)-Alkylgruppe substituierten Mono- oder Disilan.

Zu den Substanzen oder Mischungen, aus welchen der silanhaltige Schutzgaszusatz bestehen kann, gehören also die höheren, unter Normaldruck im Temperaturbereich von 1 bis 50 °C, bevorzugt von 5 bis 35°C, besonders bevorzugt von 10 bis 30°C flüssigen, linearen oder verzweigten Silane mit mindestens drei Siliziumatomen mit der allgemeinen Formel SiₙH₂ₙ₊₂ sowie die zyklischen Verbindungen und deren Isomere mit mindestens fünf Siliziumatomen mit der allgemeinen Formel SiₘH₂ₘ. Dabei kann das Silan mit einer oder mehreren (C₁-C₆)-Alkyl-, bevorzugt Methylgruppen substituiert sein. Vorteilhafterweise werden höhere lineare, verzweigte oder zyklische Silane mit 3 bis 12 Siliziumatomen eingesetzt, bevorzugt mit 4 bis 8 Siliziumatomen und besonders bevorzugt mit 5 bis 7 Siliziumatomen. Besonders bevorzugt sind also Penta-, Hexa- und Heptasilan sowie Cyclopenta- und Cyclohexasilan.

Weiterhin gehören zu den Substanzen oder Mischungen, aus welchen der silanhaltige Schutzgaszusatz bestehen kann, die zumindest mit einer (C₁-C₆)-Alkylgruppe substituierten Mono- oder Disilane. Dies sind insbesondere Methyl- und Ethylsilan, Dimethyl- und Diethylsilan, Trimethyl- und Triethylsilan und/oder Tetramethyl- oder Tetraethylsilan sowie Methly- und Ethyldisilan. Bevorzugt werden von den zumindest mit einer (C₁-C₆)-Alkylgruppe substituierten Mono- oder Disilanen diejenigen, die unter Normaldruck im Temperaturbereich von 1 bis 50°C, bevorzugt von 5 bis 35 °C, besonders bevorzugt von 10 bis 30°C flüssig sind. Besonders bevorzugt ist Tetramethylsilan.

Von Vorteil ist, dass im Lichtbogen aus dem silanhaltigen Schutzgaszusatz Siliziumverbindungen entstehen, welche beim Abkühlen der Fügenaht als Kondensationskeime dienen. Aufgrund der hohen Energie, die im und in der nahen Umgebung des Lichtbogens vorliegt, finden in Lichtbogennähe zahlreiche chemische und physikalische Reaktionen statt. Als Reaktionspartner für den silanhaltigen Schutzgaszusatz stehen die weiteren Komponenten des Schutzgases (sofern diese nicht inert sind) der Grundwerkstoff, der Zusatzwerkstoff und die Luft der Umgebung zur Verfügung. Am Ende der Reaktionskette werden insbesondere die stabilen Siliziumverbindungen stehen, wie Siliziumoxid und auch Siliziumnitrid, und auch Bindungen mit dem Grund- und Zusatzwerkstoff werden entstehen. Diese durch den Lichtbogen entstehenden Verbindungen dienen nun beim Abkühlen als Kondensationskeime. Die Kondensationskeime wiederum bewirken, dass die Schweißnaht bzw. die Lötnaht sehr feinkörnig erstarrt. Die Naht ist infolgedessen sehr elastisch, nahezu porenfrei und hochwertig. Es entsteht also eine Fügeverbindung von hoher Qualität.

Der silanhaltige Schutzgaszusatz ist vergleichsweise einfach zu handhaben. So sind die Verbindungen des silanhaltigen Schutzgaszusatzes stabil und liegen in der Regel flüssig oder gasförmig vor. Der silanhaltige Schutzgaszusatz ist nicht selbstentzündlich und deshalb auch unter Sicherheitsaspekten gut zu handhaben. So sind die Lagerung und die Bereitstellung des silanhaltigen Schutzgaszusatzes unter dem Aspekt der Sicherheit und der Verfügbarkeit unproblematisch. So ist es hinsichtlich der Bereitstellung von Vorteil, wenn der silanhaltige Schutzgaszusatz unter Normaldruck im Temperaturbereich von 1 bis 50 °C, bevorzugt von 5 bis 35 °C, besonders bevorzugt von 10 bis 30 °C flüssig ist, was bedeutet, dass der silanhaltige Schutzgaszusatz unter Normalbedingungen flüssig ist beziehungsweise durch leichtes Erwärmen oder geringfügiges Kühlen in die flüssige Phase überführbar ist.

Es hat sich weiterhin gezeigt, dass auch qualitative Verbesserungen und eine Stabilisierung des Schweißprozesses auftreten, welche wohl auf einen zusätzlichen Eintrag von Kohlenstoff zurückzuführen sind. Ein zusätzlicher Eintrag von Kohlenstoff mit dem silanhaltigen Schutzgaszusatz erfolgt, wenn dieser eine oder mehrere Alkylgruppe(n) aufweist. So wird sich dieser Effekt insbesondere bei den substituierten Mono- und Disilanen zeigen. Der von dem silanhaltigen Schutzgaszusatz eingebrachte Kohlenstoff kann dabei insbesondere den Kohlenstoff, welcher im Lichtbogen aus der weiteren Schutzgaskomponente Kohlendioxid entsteht, unterstützen beziehungsweise (ganz oder teilweise) ersetzen.

Vorteilhafterweise weist das Schutzgas den silanhaltigen Schutzgaszusatz in einer Konzentration von mindestens 0,0001 Vol-% (1 vpm), bevorzugt von mindestens 0,005 Vol-% (50 vpm) auf. Eine Konzentration von höchstens 10 Vol-%, bevorzugt von höchstens 5 Vol-% ist weiterhin von Vorteil.

Vorteilhafterweise handelt es sich bei den Komponenten, die das Schutzgas neben dem silanhaltigen Schutzgaszusatz enthält, um Argon, Kohlendioxid, Helium, Stickstoff, Sauerstoff, Wasserstoff oder ein Gemisch aus zwei oder mehr dieser Gase. Die genaue Zusammensetzung des Schutzgases richtet sich nach der speziellen Fügeaufgabe, wobei die Festlegung der weiteren Komponenten sich an der Zusammensetzung der üblicherweise verwendeten Schutzgase orientiert. Besonders bevorzugt sind deshalb Gasgemische zum Schutzgasschweißen, welche aus dem silanhaltigen Schutzgaszusatz und ferner aus Argon oder ferner aus Argon und Kohlendioxid oder ferner aus Argon und Helium bestehen.

Das Schutzgas mit dem silanhaltigen Schutzgaszusatz wird in einer vorteilhaften Ausgestaltung bereitgestellt, indem zumindest eine Komponente des Schutzgases durch eine Bereitstellungsflüssigkeit, die aus dem silanhaltigen Schutzgaszusatz besteht oder den silanhaltigen Schutzgaszusatz in flüssiger Form enthält, strömt. Diese Bereitstellung empfiehlt sich insbesondere wenn Silane als Schutzgaszusatz zugegeben werden sollen, die bei Temperaturen, die im Bereich der Umgebungstemperatur liegen, flüssig sind. Jedoch ist es auch möglich, diese Bereitstellung für Silane, die bei Umgebungstemperatur gasförmig vorliegen, zu verwenden, indem der silanhaltige Schutzgaszusatz gekühlt wird, so dass er in flüssiger Form vorliegt. Auch bei leicht flüchtigen Verbindungen wird eine leichte Kühlung von Vorteil sein. Sollte der silanhaltige Schutzgaszusatz fest sein, ist dieser zu erwärmen, damit er in die flüssige Phase übergeht. Für die Bereitstellung wird ein Behälter verwendet, der die Bereitstellungsflüssigkeit enthält. Es ist auch möglich, den silanhaltigen Schutzgaszusatz in einem Lösungsmittel, beispielsweise in höheren Kohlenwasserstoffen, zu lösen und diese Lösung als Bereitstellungsflüssigkeit zu verwenden. In diese Bereitstellungsflüssigkeit wird nun zumindest eine Komponente des Schutzgases geleitet. Vorteilhafterweise wird Argon, Kohlendioxid oder Helium eingeleitet, aber auch die anderen möglichen Komponenten oder eine Mischung daraus können in die Bereitstellungsflüssigkeit geleitet werden. Beim Strömen durch die Bereitstellungsflüssigkeit nimmt das Gas den silanhaltigen Schutzgaszusatz auf und es entsteht ein Gasgemisch, welches direkt oder nach einem Mischen mit weiteren Komponenten oder auch nach einem Verdünnen den silanhaltigen Schutzgaszusatz in der gewünschten Konzentration enthält und nun als Schutzgas für den Lichtbogenfügeprozess verwendet wird.

Um eine bestimmte Konzentration reproduzierbar und zuverlässig einstellen zu können, wird vorteilhafterweise die Bereitstellungsflüssigkeit thermostatisiert. Dadurch, dass die Bereitstellungsflüssigkeit auf konstanter Temperatur gehalten wird, ist eine gleich bleibende Konzentration der Silane in dem Gas gewährleistet. Da die Konzentration, mit der die Silane in dem Gas nach der Anreicherung vorliegt, von der Temperatur abhängt, ist es möglich, durch die Thermostatisierung die Konzentration der Silane in dem Gas einzustellen. Bei der Thermostatisierung kann sowohl eine Temperaturwahl oberhalb als auch unterhalb der Umgebungstemperatur von Vorteil sein. So ist es insbesondere bei sehr leicht flüchtigen Silanen oder bei Silanen mit Siedepunkten nahe der Umgebungstemperatur von Vorteil, wenn eine Temperatur unterhalb der Umgebungstemperatur gewählt wird, während bei höher siedenden Silanen eine Temperatur oberhalb der Umgebungstemperatur von Vorteil sein kann, damit genügend Teilchen in das Gas übergehen. Folglich ist es möglich, mittels der Thermostatisierung über die Wahl der Temperatur die Konzentration der Silane in dem Gas einzustellen.

Die erfindungsgemäße Vorrichtung zum Lichtbogenfügen, insbesondere zum Lichtbogenschweißen, umfasst deshalb folglich für die Ausführung dieser vorteilhaften Ausgestaltung einen Schweißbrenner mit einer Elektrode, zumindest eine Gasquelle und eine Anreicherungseinrichtung, wobei die Gasquelle über eine Leitung mit der Anreicherungseinrichtung und diese über eine weitere Leitung mit dem Schweißbrenner verbunden ist. Vorteilhafterweise ist dabei an der Anreicherungseinrichtung eine Einrichtung zur Thermostatisierung vorgesehen ist.

Gemäß einer alternativen, vorteilhaften Ausführung des erfindungsgemäßen Verfahrens wird der silanhaltige Schutzgaszusatz als Gas mit der oder den weiteren Komponenten zur Schweißschutzgasmischung vermischt. Dazu wird, sofern notwendig, der silanhaltige Schutzgaszusatz durch Erwärmen in die Gasphase überführt. Liegt der silanhaltige Schutzgaszusatz bereits gasförmig vor, entfällt die Erwärmung. Der gasförmige silanhaltige Schutzgaszusatz wird mit der oder den weiteren Komponenten zur fertigen Schweißschutzgasmischung vermischt. Diese Methode empfiehlt sich insbesondere für silanhaltige Schutzgaszusätze, die bei Umgebungstemperatur bereits gasförmig vorliegen oder die einen Siedepunkt nahe der Umgebungstemperatur aufweisen.

In beiden Fällen ist es möglich, entweder den silanhaltigen Schutzgaszusatz der einzigen weitern Komponenten beziehungsweise der ansonsten fertigen Schutzgasmischung zu vermengen oder zuerst den silanhaltigen Schutzgaszusatz nur mit einer Komponente zu vermengen und anschließend zu verdünnen beziehungsweise die übrigen Komponenten zu zugeben.

Neben diesen beiden bevorzugten Bereitstellungsmethoden ist es beispielsweise auch möglich, Dampf über einer Bereitstellungsflüssigkeit zu entnehmen oder den flüssigen silanhaltigen Schutzgaszusatz mit einer weitern, flüssig vorliegenden Komponente des Schutzgases, beispielsweise mit flüssigem Argon oder flüssigem Kohlendioxid, zu vermischen, um das Schutzgas zu erhalten. Hierbei ist jedoch die Einstellung der Konzentration des silanhaltigen Schutzgaszusatzes im Schutzgas meist schwieriger.

In vorteilhafter Ausgestaltung der Erfindung wird das Schutzgas vor Ort hergestellt. Bei einer Herstellung vor Ort können die Komponenten des Schutzgases gasförmig oder flüssig vom Gaselieferanten bereitgestellt werden. Möglich ist aber auch eine Abfüllung der fertigen Schutzgasmischung in Gasflaschen beim Gashersteller mit anschließender Lieferung.

Eine Verwendung des Gasgemisches gemäß Anspruch 10 zum Lichtbogenfügen zu Lichtbogenfügen, insbesondere zum Lichtbogenschweißen, aber auch zum Lichtbogenlöten und der Einsatz des erfindungsgemäßen Verfahrens ist für un-, nieder- und hochlegierte Stähle, für Nickelbasiswerkstoffe, und für Aluminium und Aluminiumlegierungen vorteilhaft. Aber auch für andere Werkstoffe wie beispielsweise Magnesium und Magnesiumlegierungen und Gusseisen kann es verwendet werden. So zeigen sich die erfindungsgemäßen Vorteile bei allen Werkstoffen.

Die Erfindung ist anhand eines Ausführungsbeispieles in der Zeichnung schematisch dargestellt und wird im Folgenden unter Bezugnahme auf die Zeichnung beschrieben.

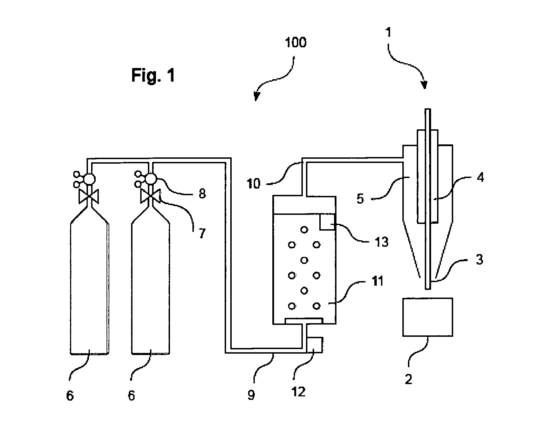

- Figur 1: zeigt eine der bevorzugten Ausführungsform der Erfindung

Die einzige Figur 1 zeigt, insgesamt mit 100 bezeichnet, eine Vorrichtung zum Schutzgasschweißen. Die Vorrichtung 100 weist, in stark vereinfachter Darstellung, einen auf ein Werkstück 2 gerichteten Schweißbrenner 1 auf. Der Schweißbrenner 1 verfügt beispielsweise über eine Schweißelektrode 3 und entsprechende Führungsmittel 4, mittels derer ein Vorschub der Schweißelektrode 3 bewirkt und diese mit Strom beaufschlagt wird. Eine Schutzgasdüse 5 umgibt, vorzugsweise konzentrisch, die Schweißelektrode 3. Dem Fachmann ist die Ausgestaltung entsprechender Schutzgasschweißeinrichtungen hinlänglich bekannt, so dass auf eine detaillierte Schilderung der Funktionsweise sowie weiterer Elemente entsprechender Schweißvorrichtungen verzichtet wird. Insbesondere sei jedoch zu verstehen gegeben, dass die erfindungsgemäßen Maßnahmen nicht nur bei Schweißverfahren mit abbrennender Elektrode sondern auch mit nicht abschmelzender Elektrode zum Einsatz kommen können. Auch zum Lichtbogenlöten kann eine solche Vorrichtung verwendet werden.

Die Schutzgasdüse 5 wird, beispielsweise über geeignete Druckgasquellen 6, mit Schutzgas versorgt, wobei geeignete Druckminderungs- und Regelungsmittel 7, 8 und Zuleitungen 9, 10 vorgesehen sind. Herkömmlicherweise (das heißt in Schutzgasschweißverfahren ohne silanhaltigen Schutzgaszusatz) ist die Schutzgasleitung 8 direkt mit einer Schutzgasdüse 5 gekoppelt.

Im Rahmen des erfindungsgemäßen Verfahrens ist vorgesehen, zwischen einen ersten Abschnitt 9 und einen zweiten Abschnitt 10 der Schutzgasleitung eine geeignete Anreicherungseinrichtung 11 zwischen zuschalten. In der Anreicherungseinrichtung 11 erfolgt eine Anreicherung des Schutzgases mit dem silanhaltigen Schutzgaszusatz. Das fertige Schutzgas gelangt dann über Schutzgasleitung 10 zu der Schutzgasdüse 4.

Wenngleich in der Figur 1 die Anreicherungseinrichtung 11 als zwischen einen ersten Abschnitt 9 und einen zweiten Abschnitt 10 der Schutzgasleitung zwischengeschaltet ist, kann selbstverständlich auch eine abweichende Anordnung vorgesehen sein. So kann die Anreicherungseinrichtung 11 auch über einen entsprechenden Abzweig oder Bypass angeschlossen sein, insbesondere auch zwischen zwei Druckgasquellen.

Wenigstens ein Abschnitt einer der Schutzgasleitungen 9, 10 und/oder die Anreicherungseinrichtung 11 kann auch über entsprechende Thermostatisierungsmittel 12, 13 verfügen, beinhaltend beispielsweise einen Heizer und/oder einen Temperatursensor, um eine Thermostatisierung des Schutzgases und/oder eine Thermostatisierung der flüssigen Silane in der Anreicherungseinrichtung 11 zu bewirken.

## Patentansprüche

1. Verfahren zum Lichtbogenfügen, insbesondere zum Lichtbogenschweißen mit abschmelzender oder nicht abschmelzender Elektrode unter Schutzgas **dadurch gekennzeichnet, dass** das Schutzgas einen silanhaltigen Schutzgaszusatz enthält, welcher aus mindestens einem unter Normaldruck im Temperaturbereich von 1 bis 50 °C, bevorzugt von 5 bis 35 °C, besonders bevorzugt von 10 bis 30 °C flüssigen linearen, verzweigten oder zyklischen, mindestens drei Siliziumatome aufweisenden Silan, das gegebenenfalls mit einer oder mehreren (C₁-C₆)-Alkyl-, bevorzugt Methylgruppen substituiert sein kann, oder/und aus mindestens einem zumindest mit einer (C₁-C₆)-Alkylgruppe substituierten Mono- oder Disilan ausgewählt ist.

2. Verfahren nach Anspruch 1 **dadurch gekennzeichnet, dass** der silanhaltige Schutzgaszusatz aus zumindest einem der linearen, verzweigten oder zyklischen Silan mit 4 bis 12 Siliziumatomen, vorzugsweise mit 5 bis 8 Siliziumatomen und/oder aus Methyl- oder Ethylsilan, Dimethyl- oder Diethylsilan, Trimethyl- oder Triethylsilan und/oder Tetramethyl- oder Tetraethylsilan ausgewählt ist.

3. Verfahren nach Anspruch 1 oder 2 **dadurch gekennzeichnet, dass** im Lichtbogen aus dem silanhaltigen Schutzgaszusatz Siliziumverbindungen entstehen, welche beim Abkühlen der Fügenaht als Kondensationskeime dienen.

4. Verfahren nach einem oder mehreren der Ansprüche 1 bis 3 **dadurch gekennzeichnet, dass** das Schutzgas den silanhaltigen Schutzgaszusatz in einer Konzentration von mindestens 0,0001 Vol-% (1 vpm), bevorzugt von mindestens 0,005 Vol-% (50 vpm) und von höchstens 10 Vol-%, bevorzugt von höchstens 5 Vol-%, besonders bevorzugt von höchstens 2 Vol-% aufweist.

5. Verfahren nach einem oder mehreren der Ansprüche 1 bis 4 **dadurch gekennzeichnet, dass** das Schutzgas weiterhin aus Argon, Kohlendioxid, Helium, Stickstoff, Sauerstoff, Wasserstoff oder aus einem Gemisch aus zwei oder mehr dieser Gase besteht.

6. Verfahren nach einem oder mehreren der Ansprüche 1 bis 5 **dadurch gekennzeichnet, dass** zur Herstellung des Schutzgases eine Bereitstellungsflüssigkeit verwendet wird, durch welche zumindest eine Komponente des Schutzgases strömt, wobei die Bereitstellungsflüssigkeit aus dem silanhaltigen Schutzgaszusatz besteht oder den silanhaltigen Schutzgaszusatz enthält.

7. Verfahren nach Anspruch 6 **dadurch gekennzeichnet, dass** die Bereitstellungsflüssigkeit thermostatisiert wird.

8. Verfahren nach einem der Ansprüche 1 bis 5 **dadurch gekennzeichnet, dass** der silanhaltige Schutzgaszusatz als Gas mit der oder den weiteren Komponenten zum Schutzgasmischung vermischt wird.

9. Verfahren nach einem der Ansprüche 1 bis 8 **dadurch gekennzeichnet, dass** un-, nieder- und hochlegierten Stählen, Nickelbasiswerkstoffen, Aluminium und Aluminiumlegierungen gefügt, insbesondere geschweißt werden.

10. Schutzgasmischung, welche aus einem silanhaltigen Schutzgaszusatz und ferner aus Argon, Helium, Kohlendioxid, Sauerstoff, Stickstoff und/oder Wasserstoff besteht, wobei der silanhaltige Schutzgaszusatz aus mindestens einem unter Normaldruck im Temperaturbereich von 1 bis 50 °C, bevorzugt von 5 bis 35 °C, besonders bevorzugt von 10 bis 30 °C flüssigen linearen, verzweigten oder zyklischen, mindestens drei Siliziumatome aufweisenden Silan, das gegebenenfalls mit einer oder mehreren (C₁-C₆)-Alkyl-, bevorzugt Methylgruppen substituiert sein kann, oder/und aus mindestens einem zumindest mit einer (C₁-C₆)-Alkylgruppe substituierten Mono- oder Disilan ausgewählt ist.

11. Schutzgasmischung nach Anspruch 10 **dadurch gekennzeichnet, dass** der silanhaltige Schutzgaszusatz aus zumindest einem der linearen, verzweigten oder zyklischen Silan mit 4 bis 12 Siliziumatomen, vorzugsweise mit 5 bis 8 Siliziumatomen und/oder aus Methyl- oder Ethylsilan, Dimethyl- oder Diethylsilan, Trimethyl- oder Triethylsilan und/oder Tetramethyl- oder Tetraethylsilan ausgewählt ist.

12. Schutzgasmischung nach Anspruch 10 oder 11 **dadurch gekennzeichnet, dass** die Schutzgasmischung den silanhaltigen Schutzgaszusatz in einer Konzentration von mindestens 0,0001 Vol-% (1 vpm), bevorzugt von mindestens 0,005 Vol-% (50 vpm) und von höchstens 10 Vol-%, bevorzugt von höchstens 5 Vol-% enthält.

13. Verwendung einer Schutzgasmischung nach einem der Ansprüche 10 bis 12 zum Lichtbogenfügen, insbesondere zum Lichtbogenschweißen von un-, nieder- und hochlegierten Stählen, Nickelbasiswerkstoffen, Aluminium und Aluminiumlegierungen.

14. Vorrichtung (100) zum Lichtbogenfügen, insbesondere zum Lichtbogenschweißen, welche einen Schweißbrenner (1) mit einer Elektrode (3), zumindest eine Gasquelle (6) und eine Anreicherungseinrichtung (11) umfasst, wobei die Gasquelle (6) über eine Leitung (9) mit der Anreicherungseinrichtung (11) und diese über eine weitere Leitung (10) mit dem Schweißbrenner (5) verbunden ist.

15. Vorrichtung (100) nach Anspruch 14 **dadurch gekennzeichnet, dass** an der Anreicherungseinrichtung (11) eine Einrichtung zur Thermostatisierung (13) vorgesehen ist.
